# EUROPEAN PATENT APPLICATION

(11) **EP 4 197 884 A1**
(43) Date of publication of application: **21.06.2023**
(21) Application number: 22213809.1
(22) Date of filing: 15.12.2022
(51) Int. Cl.: B62D 1/16

(54) **STEERING SYSTEM AND ALIGNMENT TOOL**

(30) Priority: 16.12.2021 NL 2030163
(71) Applicant: DAF Trucks N.V., 5643 TW Eindhoven (NL)
(72) Inventor: KUIJPERS, Martinus Wilhelmina Paulus, 5643 TW Eindhoven (NL)
(74) Representative: V.O.

(57) **Abstract**

It is an aspect of the present invention to alleviate, at least partially, the problems discussed above by a steering shaft comprising: at one outer end a inputs shaft of steering gear connector connecting the first universal joint to the inputs shaft of steering gear, at an intermediate position of the steering shaft, a steering shaft connector connecting the second universal joint to the first universal joint at a first preset phase angle; and at an opposite outer end a wheel connector connecting the second universal joint to the steering wheel;
wherein the steering shaft connector is provided with a serrated interior that coincides with a correspondingly serrated shaft part of the first or second universal joint, for providing a discrete rotary position of the steering shaft connector relative to the serrated shaft part; and a first mounting aid for defining a relative rotary position of the steering shaft connector relative to the serrated shaft part.

## Description

### BACKGROUND

The invention relates to a steering shaft to be mounted in an adjustable steering column. The steering shaft connects a steering wheel to an input shaft of a steering gear assembly and comprises universal joints or cardan joints. The invention also relates to a jig for aligning the universal joints, and to a method of method of mounting the steering shaft.

In particular for a heavy goods vehicle, such a steering shaft is part of a steering system of the vehicle. The steering system features a steering wheel, mounted to the steering column, adjustable relative to a vehicle cabin for optimizing the steering wheel position relative to a driver.
The steering shaft is mounted in the adjustable steering column and connects the steering wheel to the input shaft of a steering gear, typically provided in a wheel gear assembly arranged in the chassis to transmit the steering wheel rotation, via the steering shaft to an actual wheel rotation.

Since drivers of vehicles have a large variety of body sizes and driver preferences, there is a desire in the field for an adjusting device which meets the demands of drivers who e.g. use a forward steering wheel position and like to have a more horizontal steering wheel angle as well as drivers who use a rearward steering wheel position and like to have a more vertical steering wheel angle. Furthermore, for proper direct vision on the road, a driver's position in such vehicles is most forward in the cabin, especially in vehicles, such as cab-over-engine vehicles or heavy goods vehicles.

To comply with an optimal steering wheel position the steering wheel is adjustable to meet a driver's preference, and to this end the steering shaft will feature so called universal joints, or cardan joints, for articulating the steering shaft in the set adjusted steering column position to engage with the input shaft. In practice, a steering shaft has two universal joints, that can be provided with a proper phasing angle, in order to provide a smooth rotation without jerky or wobbly torque transmission. This is done by proper rotational orientation of the main rotational axes of the universal joints relative to each other. Naturally, in a practical situation, it is important also that a steering wheel, which has, although to a large extent rotationally invariant, a neutral position, where the steering wheel offers, with wheels aligned in straight direction along the length direction of the vehicle, a level view on instrument panels and user devices arranged on the steering wheel. With the wheels in aligned position, it is a challenge to mount the steering wheel in a correct neutral position, since in practice, small deviations of about max 5 degrees may give rise to an incorrect neutral position of the steering wheel where the wheels are not aligned perfectly with the length direction. At the same time, it is important to apply an optimal relative rotational orientation of the universal joints, since this minimizes inconstant torque transfer of the wheel to the steering wheels. Thus, a challenge exists in providing a steering shaft with a correct phasing angle, that at the same time provides an adjustable neutral position of the steering wheel.

### SUMMARY

It is an aspect of the present invention to alleviate, at least partially, the problems discussed above by a steering shaft comprising: at one outer end an input shaft connector connecting a first universal joint to the input shaft of a steering gear assembly, at an intermediate position of the steering shaft, a steering shaft connector connecting a second universal joint to the first universal joint at a first preset phase angle; and at an opposite outer end a wheel connector connecting the second universal joint to the steering wheel.

The steering shaft connector is provided with a serrated interior that coincides with a correspondingly serrated shaft part of the first or second universal joint. The serrated interior provides a discrete rotary position of the steering shaft connector relative to the serrated shaft part. A first mounting aid is provided for defining a relative rotary position of the steering shaft connector relative to the serrated shaft part, wherein the first mounting aid comprises a sleeve having a serrated interior that coincides with the serrated shaft part, which can be rotated relative to each other at discrete rotary positions and a sleeve protrusion laterally protruding from said sleeve; wherein the steering shaft connector comprises an axial slot coinciding with the protrusion so as to provide the first preset phase angle for mounting the steering shaft connector to serrated shaft part, wherein the protrusion has a planar shape fitted to be inserted in the axial slot of the steering shaft connector and comprising a through hole that coincides with a clamping bolt position, for clamping the steering shaft connector to the serrated shaft part.

The mounting aid enables straight alignment between the steering wheel and wheels, while keeping an optimized phasing angle between the universal joints. The input shaft connector thereto preferably is provided with a second mounting aid having a rotary indicator indicating the first preset phase angle relative for mounting the input shaft connector to the input shaft of the steering gear assembly. The rotary indicator preferably aligns to a corresponding indicator provided in the input shaft connector. The input shaft connector may be integral to a first joint coupling of the first universal joint. By having the first mounting aid provided in this way, the wheel shaft can be provided with a proper phasing angle in advance, so that it can be easily installed with a correct phasing angle, so that on site assembly is easier and less error-prone.

### BRIEF DESCRIPTION OF THE DRAWINGS/FIGURES

The accompanying drawings, which are incorporated herein and form part of the specification, illustrate the present invention and, together with the description, further serve to explain the principles of the invention and to enable a person skilled in the relevant art(s) to make and use the invention.
Figure 1 shows a simplified schematic representation of a system setup of a steering sytem;
Figure 2 an shows further details of a steering gear assembly;
Figure 3 (A, B, C) shows in more detail the steering shaft;
Figure 4 shows a detailed view of a steering shaft including a first mounting aid;
Figure 5 (A, B) shows a detailed view of a wheel gear assembly including a second mounting aid; and
Figure 6 shows a preferential method for mounting the steering shaft in a steering column of a vehicle.

### DETAILED DESCRIPTION

Unless otherwise defined, all terms (including technical and scientific terms) used herein have the same meaning as commonly understood by one of ordinary skill in the art to which this invention belongs as read in the context of the description and drawings. It will be further understood that terms, such as those defined in commonly used dictionaries, should be interpreted as having a meaning that is consistent with their meaning in the context of the relevant art and will not be interpreted in an idealized or overly formal sense unless expressly so defined herein. In some instances, detailed descriptions of well-known devices and methods may be omitted so as not to obscure the description of the present systems and methods. The term "and/or" includes any and all combinations of one or more of the associated listed items. It will be further understood that the terms "comprises" and/or "comprising" specify the presence of stated features but do not preclude the presence or addition of one or more other features. All publications, patent applications, patents, and other references mentioned herein are incorporated by reference in their entirety. In case of conflict, the present specification, including definitions, will control.

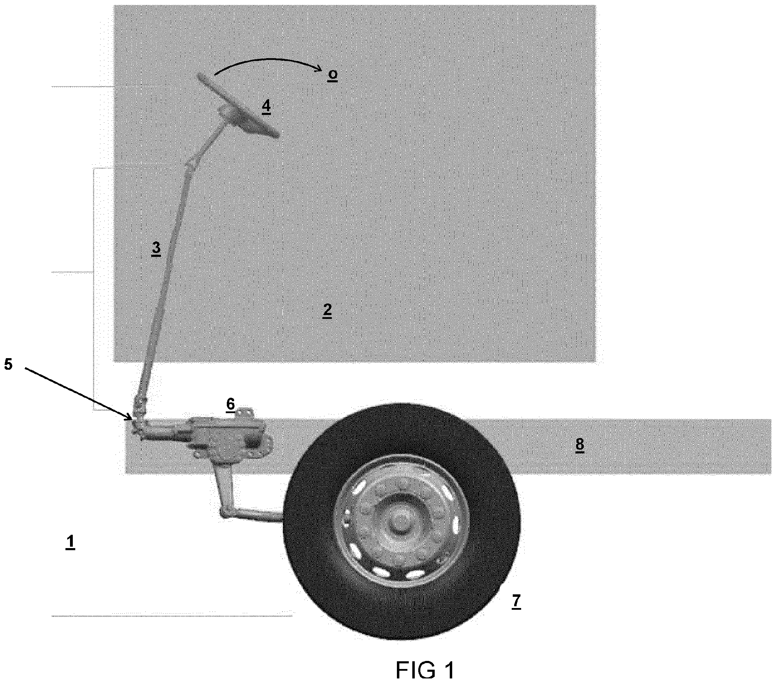

In Fig. 1 an example of an embodiment of a steering system 1 of a heavy goods vehicle according to the invention is shown in side view. The steering system 1 comprises a cabin frame 2, a steering shaft 3 for a steering wheel 4. A steering wheel connection assembly (not shown) connects the steering wheel to the cabin frame 2. The steering system 1 thereby comprises a steering wheel 4 mounted to a steering column adjustable relative to a vehicle cabin for optimizing the steering wheel position relative to a driver. A input shaft of steering gear 5 is coupled to a steer wheel gear 6 arranged to transmit the steering shaft rotation to a rotation of the wheels 7.

In an exemplary range, with the steering wheel connection assembly as shown in Figure 1 an angular adjustment angle o of the steering column between 8 degrees and 60 degrees degrees can be obtained, by properly orienting the wheel and corresponding universal joints. In the figure the wheels 7 may be conventionally connected to a chassis frame 8, to which also a steering gear housing 6 is connected.

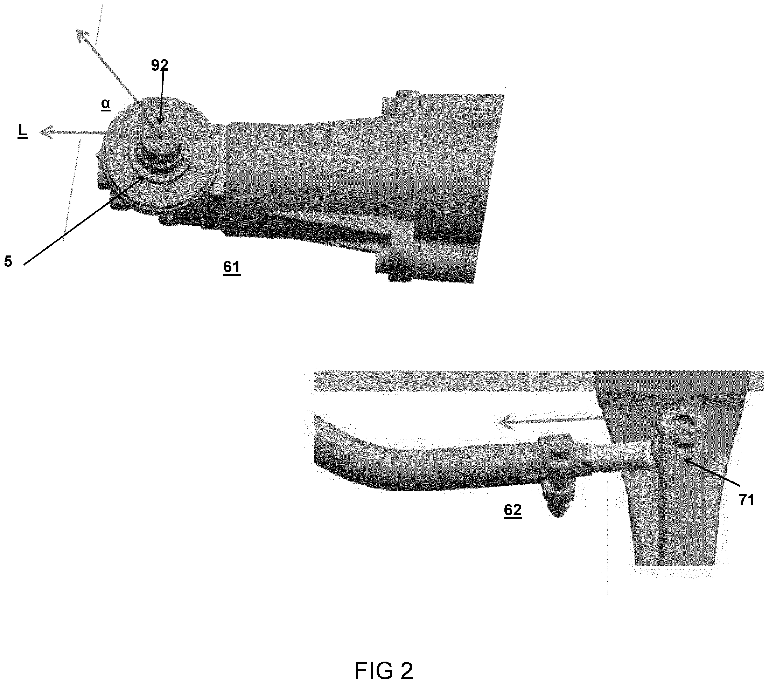

Figure 2A and 2B show in more details detail steering gear 61 that comprises input shaft of steering gear 5 for coupling with the steering shaft 3. To this end a input shaft mounting element 92 is depicted, that has a rotary indicator indicating a preset phase angle α relative to an alignment direction L (preferably in line with a vehicle's lenght orientation) for mounting a input shaft connector 35 (see following figure) to the input shaft 5 in a condition that the wheels 7 are in an aligned fashion corresponding to the alignment direction L. By the input shaft mounting element 92, a joint coupling (disclosed here below) of a steering shaft connector can be connected in a correct preset phase angle α to the steering shaft 3. The rotary movement of the input shaft 5 is, in the exemplary example, transmitted through a wheel gear 61 into a linear movement of a linkage 62 mounted to a wheel arm 71, that is seamlessly adjustable to provide a straight ahead orientation of the wheels, as conventionally known.

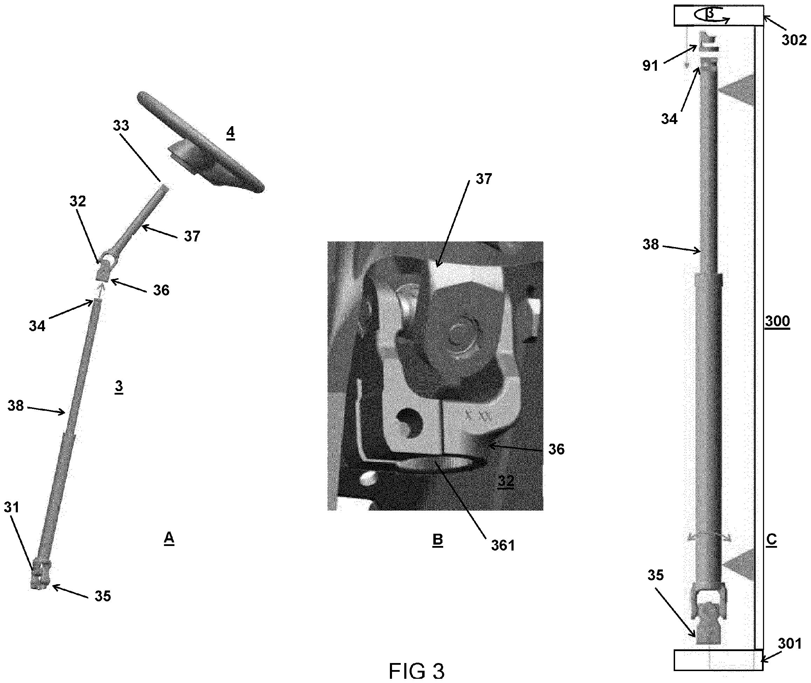

In Figure 3A-C a more detailed view of steering shaft 3 is shown, wherein at one outer end a input shaft connector 35 is shown for connecting a first universal joint 31 to the input shaft 5 of wheelgear assembly 61 shown in figure 2. The input shaft connector 35 may be of a similar type as steering shaft connector 36, shown in Figure 3B, which at an intermediate position of the steering shaft 3 connects a second universal joint 32 to the first universal joint 31; and at an opposite outer end a wheel connector 33 connects the steering shaft 3, in particular a steering column part 37 coupled to second universal joint 32 to the steering wheel 4. Similar to steering shaft connector 36, input shaft connector 35 may be formed by a first joint coupling integral to the first universal joint 31 but it can also be provided at a certain distance of the first joint coupling.

In Figure 3B steering shaft connector 36 is also, in the example, an integral part of universal joint 32. It is shown provided with a serrated interior 361 that coincides with a correspondingly serrated shaft part 34 of a steering shaft part 38 connecting the first universal joint 31. The steering shaft part 38 may be telescopic, which is a standard feature but is not necessary for applying the inventive principle. By the serrated interior of steering shaft connector 36, serrated part 34 ensures a discrete rotary position of the steering shaft connector 36. In Figure 3C mounting aid 91 is shown for defining a relative rotary position of the steering shaft connector 36 relative to the serrated shaft part 34.

In particular, Figure 3C schematically shows a jig 300 comprising a jig shaft element 301, for connection to the transmission connector 35 of a steering shaft 3. A jig connector shaft part 302 is arranged for connection to the serrated shaft part 34 of steering shaft 3, wherein the jig shaft part 301 and jig connector part 302 can be rotated at an orientation so as to align the first mounting aid 91 in a preset phase angle relative to the transmission connector. The preset phase angle β ensures an optimal torque transmission of the univerals joints 31 and 32, which now can be conveniently oriented by the mounting aid 91, which defines the relative rotary position of the steering shaft connector (see Figure 3A) when mounting it to the serrated shaft part 34. Note that the mounting procedure in this way can be optimized, since the steering column part 37 needs to be mounted to steering shaft part 38 in the steering console without a chance of mounting error.

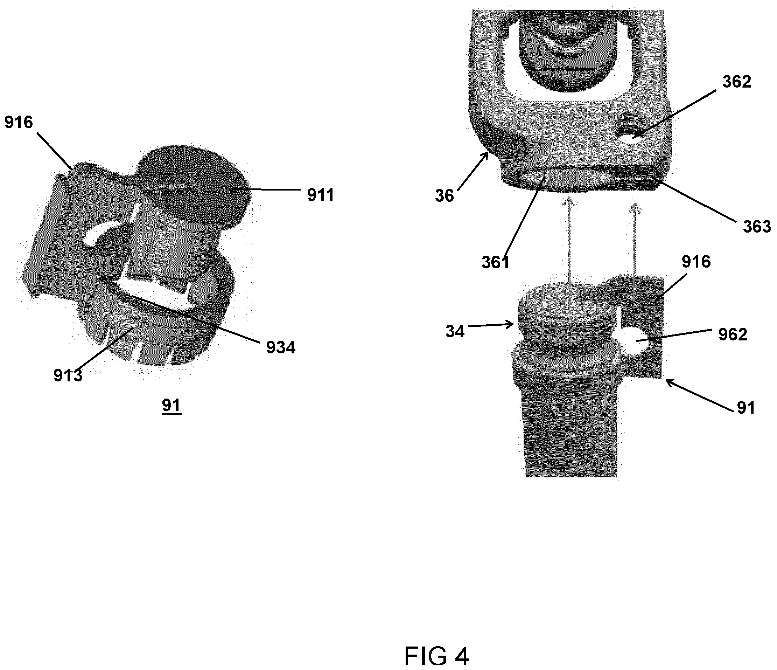

Figure 4 in more detail shows a serrated shaft part 34; a corresponding mounting aid 91 and a steering shaft connector 36 that engages in a discrete rotary fashion to the serrated shaft part 34. As can be learned from the figure, steering shaft connector 36 may engage in a rotary angle that is defined by the mounting aid 91. To this end, in the example, mounting aid 91 for mounting the steering shaft connector 36 may comprise a sleeve 913 having a serrated interior 934 that encloses serrated shaft part 34 of steering shaft 3. A sleeve protrusion 916 laterally protrudes from sleeve 913 of mounting aid 91. The steering shaft connector 36 in this example comprises an axial slot 363 coinciding with the protrusion 916 of mounting aid 91 so as to provide the preset phase angle for mounting the steering shaft connector 36 to serrated shaft part 34.

In a further preferred embodiment, sleeve part 91 has an axial end cover 911 arranged to abut the serrated shaft part. The end cover ensures a proper fit of the sleeve to the serrated part 34; furthermore, the sleeve protrusion, which in the example has a planar shape 916 fitted to be inserted in the axial slot 363 of the steering shaft connector 36 may comprise through hole 962 that coincides with a clamping bolt position 362, for clamping the steering shaft connector 36 to the serrated shaft part 34. The serrated shaft part may have a circumferential groove to ensure a shape fitting connection. By said features, it can be prevented that inadvertently a bolt connection would not be properly mounted, reducing the chance of assembly error.

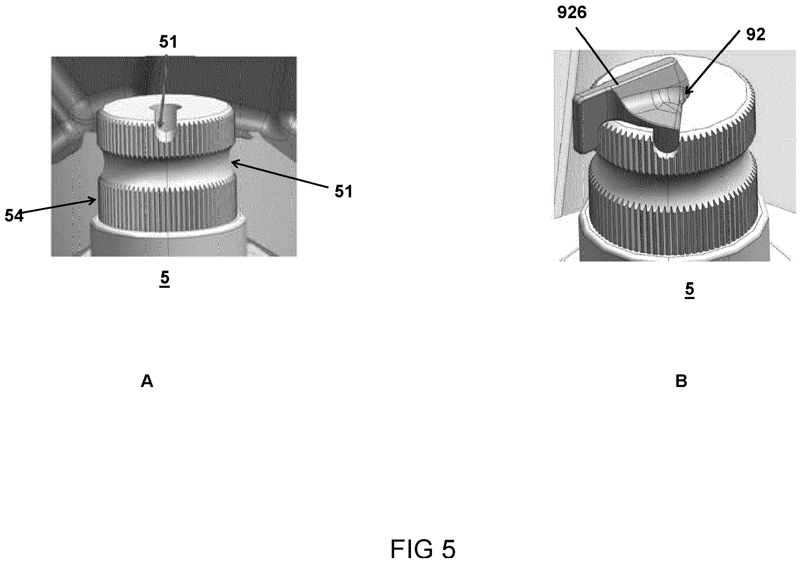

Figure 5 shows in an exemplary fashion a second mounting aid 92 for mounting steering shaft part 38 to the input shaft 5 of wheel gear 61, illustrated in Figure 1 and 2. This mouting aid 92 may be provided by an angular form having a shape that formfittingly connects to a radial slot 51 provided in the input shaft 5, in more detail shown in top view in Figure 5B. In this way rotary indicator 926 may align to a corresponding indicator provided in the input shaft connector 5. Similar to serrated shaft part 34 that engages the steering shaft connector 36, input shaft connector 35, of a similar design as connector 36 connects to the serrated part 54 of input shaft 5, while mounting aid 92 has a protrusion 926 coincides with an indicator, e.g. in the form of a receiving slot in input shaft connector 35 similar to corresponding slot 363 of steering shaft connector 36 in Figure 4.

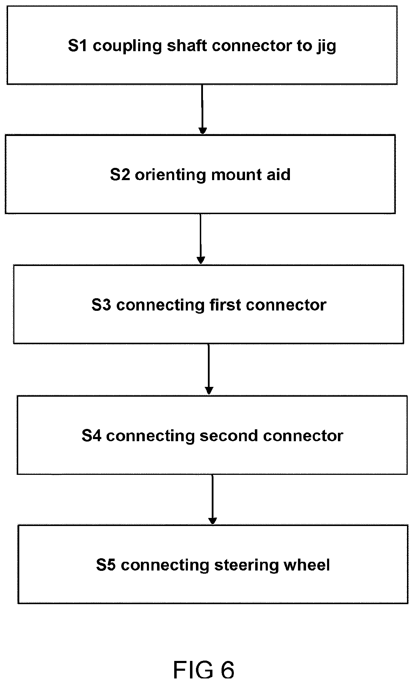

Figure 6 finally shows an exemplary preferred method of mounting a steering shaft of the type illustrated previously. In a first coupling step S1, a input shaft connector of steering shaft is coupled to the jig shaft part 301 of the jig illustrated in Figure 3, to orient the input shaft connector 35 in a specified first rotational position. In a second orienting step S2, first mounting aid 91 is placed on serrated shaft part 34 of the first universal joint 31; and properly oriented by the jig connector part 302 of the jig. The mounting aid 91 is thus oriented at preset phase angle relative to the jig shaft part. In a further step S3 a steering shaft connector 36 may be connected to a second universal joint part 34 of the first universal joint at the preset phase angle defined by the first mounting aid 91.

In a further step S4 input shaft connector 35 may be connected to the input shaft 5; and, in step S5 the steering wheel connector may be connected to an opposite outer end of the steering shaft. Some steps, in particular, steps S3-S5 may be interchanged as can be readily gleaned by a skilled person and are deemed disclosed similarly.

Other variations to the disclosed embodiments can be understood and by those skilled in the art in practicing the claimed invention, from a study of the drawings, the disclosure, and the appended claims. In the claims, the word "comprising" does not exclude other elements or steps, and the indefinite article "a" or "an" does not exclude a plurality. A single unit may fulfill the functions of several items recited in the claims. The mere fact that certain measures are recited in mutually different dependent claims does not indicate that a combination of these measured cannot be used to advantage. Any reference signs in the claims should not be construed as limiting the scope.

## Claims

1. A steering shaft to be mounted in an adjustable steering column and connecting a steering wheel to a input shaft of a steering gear assembly, said steering shaft having at least first and second universal joints, for articulating said steering shaft in the set adjusted steering column position; the steering shaft further comprising;
∘ at one outer end a input shaft connector connecting the first universal joint to the input shaft, and
∘ at an intermediate position of the steering shaft, a steering shaft connector connecting the second universal joint to the first universal joint at a first preset phase angle; and
∘ at an opposite outer end a wheel connector connecting the second universal joint to a steering wheel;
wherein the steering shaft connector is provided with a serrated interior that coincides with a correspondingly serrated shaft part of the first or second universal joint, for providing a discrete rotary position of the steering shaft connector relative to the serrated shaft part; and a first mounting aid for defining a relative rotary position of the steering shaft connector relative to the serrated shaft part, wherein the first mounting aid comprises a sleeve having a serrated interior that coincides with the serrated shaft part, which can be rotated relative to each other at discrete rotary positions and a sleeve protrusion laterally protruding from said sleeve; wherein the steering shaft connector comprises an axial slot coinciding with the protrusion so as to provide the first preset phase angle for mounting the steering shaft connector to serrated shaft part, wherein the protrusion has a planar shape fitted to be inserted in the axial slot of the steering shaft connector and comprising a through hole that coincides with a clamping bolt position, for clamping the steering shaft connector to the serrated shaft part.

2. The steering shaft of claim 1,wherein said input shaft connector comprises a second mounting aid having a rotary indicator indicating a second preset phase angle relative for mounting the input shaft connector to the input shaft of the steering gear assembly.

3. The steering shaft of claim 2, wherein the rotary indicator aligns to a corresponding indicator provided in the input shaft connector.

4. The steering shaft of claim 3, wherein the input shaft connector is integral to a first joint coupling of the first universal joint.

5. The steering shaft of any preceding claim, wherein the sleeve part has an axial end cover arranged to abut the serrated shaft part.

6. The steering shaft of any preceding claim, wherein the steering shaft connector is integral to a joint coupling of one of the first or second universal joints; and wherein the serrated shaft part is integral to a joint coupling of another one of the first and second universal joints.

7. A steering system of a vehicle, in particular a heavy goods vehicle, the steering system comprising
∘ a steering wheel mounted to a steering column adjustable relative to a vehicle cabin for optimizing the steering wheel position relative to a driver,
∘ a steering shaft according to any preceding claim; and
∘ an input shaft arranged to transmit the steering shaft rotation to a steering wheel rotation.

8. The steering system of claim 7 when combined with claim 2, wherein, at first and second preset phase angles, wheels and steering wheel are aligned in a neutral orientation.

9. A jig comprising a jig shaft, for connection to the input shaft connector of a steering shaft according to any of claims 1-6, and a jig connector for connection to a serrated shaft part of a steering shaft according to any of claims 1-6; wherein jig shaft and jig connector are rotated at an orientation so as to align the first mounting aid in the first preset phase angle.

10. A method of mounting a steering shaft according to any of claims 1-6 in an adjustable steering column, comprising the steps of:
∘ coupling the inputs shaft of steering gear connector of the steering shaft to the jig shaft of the jig according to claim 9, to orient the inputs shaft of steering gear connector in a specified rotational position;
∘ orienting the first mounting aid on a serrated shaft part of the first universal joint; by the jig connector of the jig according to claim 9, at a first preset phase angle relative to the jig shaft;
∘ connecting a steering shaft connector connecting the second universal joint to the first universal joint at the first preset phase angle defined by the first mounting aid;
∘ connecting the inputs shaft of steering gear connector to the inputs shaft of steering gear; and
∘ connecting the steering wheel connector to an opposite outer end of the steering shaft.
